# EUROPEAN PATENT SPECIFICATION

(11) **EP 1 937 755 B1**
(45) Date of publication and mention of the grant of the patent: **18.05.2016**
(21) Application number: 06803538.5
(22) Date of filing: 13.09.2006
(51) Int. Cl.: A47F 3/04, C08J 7/04, C08L 75/04, C08G 18/10

(54) **ANTI-FOG FILM ASSEMBLIES, METHOD OF MANUFACTURE, AND ARTICLES MADE THEREOF**
ANTIBESCHLAGFILMANORDUNGEN, HERSTELLUNGSVERFAHREN DAFÜR UND GEGENSTÄNDE DARAUS
ENSEMBLES FILM ANTIBUEE, PROCEDE DE FABRICATION, ET ARTICLES PRODUITS A PARTIR DE CEUX-CI

(30) Priority: 30.09.2005 US 241629
(43) Date of publication of application: 02.07.2008
(73) Proprietor: SABIC Innovative Plastics IP B.V., 4612 PX Bergen op Zoom (NL)
(72) Inventor: BOROWIEC, Matthew, Conway, MA 01341 (US); LAURIN, Michael, M., Pittsfield, MA 01201 (US); VIGNOVIC, David, M., Milvalley, CA 94941 (US)
(74) Representative: Stiebe, Lars Magnus
(86) International application number: PCT/US2006/035725
(87) International publication number: WO 2007/040941

(56) References cited:
- WO-A-03/092448
- WO-A-2004/013063

## Description

### BACKGROUND OF INVENTION

This application relates to multilayer film assemblies useful to prevent fogging, their method of manufacture, and articles formed from the film assemblies.

When a cooler surface comes in contact with warmer moist air, condensation may occur on the cooler surface. Depending on temperature differences, the condensation may take the form of fog or frost on the surface and, particularly with substantially transparent surfaces, affect light transmission and impair visibility.

Anti-fog films find utility in a number of different applications. For example, the marketing and sales of refrigerated merchandise often includes consumer selection directly from the refrigerated unit. To ensure effective marketing, the items within the case should remain visible and discernible to a patron looking into the case through a light transmitting, usually substantially transparent, panel, or door. When a patron chooses an item and opens the door to the case, the door may fog due to condensation as the cool, inside surface of the door comes in contact with the moist, ambient atmosphere outside the case. Typically, this fog remains even after closing the door, and impairs the view into the case for subsequent patrons. The inability to see into the case can result in loss of sale for the store. In addition, increased energy costs may incur, as patrons hold the door open longer to see the items inside the case.

One method used to reduce this problem includes a heated door that un-fogs the door after some length of time. These heated doors may be both expensive to purchase and costly to operate due to energy consumption to maintain the heated door, while the refrigerator is cooling/freezing the food inside the case. The lower the temperature within the case, the greater the costs of maintaining fog and frost resistant doors.

Another remedy is to provide anti-fog coatings, either with or without the door heaters. However, typical permanent anti-fog coatings do not provide effective fog resistance over a wide temperature gradient. Most noticeably, the lower temperature storage and display cases (0°C and below) often develop fog and frost and therefore do not achieve optimum visibility with current anti-fog coatings.

WO 2003/092448 discloses fog resistant coatings made of polyurethane that can prevent condensation under topical operation conditions of a refrigerator door, wherein the coating is applied directly on the substrate and then hardened at high temperature.

WO 2004/013063 discloses a two package coating agent for forming an antifogging film comprising a first component comprising an isocyanate component and a second component comprising at least one water-absorbing polyol, a hydrophobic polyol and a surfactant having a group reactive with the isocyanate group.

US 7,003,920 teaches a glazing unit comprising an antifrost adsorbent layer deposited directly on the glass. US 5,402,265 discloses a flexible fog free mirror device to be used under high humidity bathroom conditions. "Modern Platics" Magazine of February 1988 discloses a urethane coating over a polyester film.

Therefore, there is a need for new, low temperature anti-fog systems to enhance visibility into refrigerator and freezer cases by preventing or inhibiting fogging of the door when the door is exposed to cool air and then exposed to moist warmer air when opened.

### BRIEF DESCRIPTION OF THE INVENTION

A first aspect of the invention is an anti-fog film assembly (110) for preventing condensation on a substrate comprising:
A transparent film (130) having a first surface (132) and a second surface (134) opposite the first surface (132); and
a transparent anti-fog layer (120) formed from
   a polyurethane-film forming composition comprising 10% to 40% by weight of total solids of the polyurethane forming composition of a hydroxyl-bearing surfactant having a hydrophobic region and a hydrophilic region, a polyisocyanate-containing component, and an active hydrogen-containing component reactive with the polyisocyanate-containing component, or
   a polyisocyanate prepolymer having reactive isocyanate groups, a hydrophilic polyol, and a hydroxyl-bearing surfactant having a hydrophilic region and hydrophobic region;
effective to provide the layer with anti-fog properties when said substrate is alternatively held between -23°C and 0°C and then exposed to ambient air with a relative humidity of 40% to 70% at temperatures of 18 °C to about 30 °C for up to 2 minutes, the anti-fog layer being disposed on an area of the first surface of the film; and
an adhesive layer (140) disposed on an area of the second surface (134) of the transparent film (130),
wherein the film assembly (110) provides visibility through said adhesive layer (140), said film (130) and said anti-fog layer (120)
wherein the assembly is repositionable on the substrate (390).

In another embodiment, a condensation-resistant article comprises a transparent substrate having a first surface; and the above-described anti-fog film assembly wherein the second surface of the film is disposed on an area of the first surface of the substrate.

A refrigerated panel comprises a transparent refrigerator panel having a first surface, and the above-described anti-fog film assembly, wherein the second surface of the film is disposed on an area of the first surface of the door panel.

### BRIEF DESCRIPTION OF THE DRAWINGS

Refer now to the figures, which are exemplary embodiments, and wherein the like elements are numbered alike.
Figure 1 is a schematic view of an exemplary anti-fog film assembly as disclosed herein;
Figure 2 is a schematic view of an exemplary embodiment of an anti-fog film assembly having an optional graphic component as disclosed herein;
Figure 3 is a schematic view of an exemplary article comprising an anti-fog film assembly and a substrate as disclosed herein; and

The above-described and other features will be appreciated and understood by those skilled in the art from the following detailed description, drawings, and appended claims.

### DETAILED DESCRIPTION

The anti-fog film assemblies disclosed herein are substantially transparent, multilayer films useful in the production of condensation-resistant articles such as refrigerator and freezer doors and panels, or bathroom mirrors, but they are not limited to these specific products or applications. The anti-fog properties of the film assemblies are effective at temperatures as low as about -17°C, or even -23°C, without use of external heaters. These temperatures are significantly lower than those enabled by prior art antifogging films. Since heaters are not required, use of such films can provide a significant energy savings. The assemblies are manufactured to be repositionable and/or, in an advantageous optional feature, to allow the inclusion of a graphic.

The anti-fog film assemblies are comprised of a substantially transparent anti-fog layer and a substantially transparent film. As used herein, "substantially transparent" refers to optical clarity, and means that enough light is transmitted through the layer(s) to allow visualization through the film assembly by an observer. Thus, while some haze or coloration may be present in the individual layer(s), such haze or coloration does not significantly interfere with visualization.

It has been shown by the inventors hereof that when this anti-fog film assembly is applied to a substrate, the formation of condensation (water droplets) on the substrate surface is reduced or prevented when the assemblies are exposed to temperatures that alternate between about 65°C and about -23°C. While reference is made herein to "anti-fog film assembly," this term is merely for convenience in discussion, and it is to be understood that the term encompasses film assemblies used to prevent visual impairment due to the formation of water droplets and/or water crystals.

Substantially transparent anti-fog layers that are effective at temperatures below about -17°C are formed from a polyurethane-film forming composition. The film-forming composition further comprises a surfactant having a hydrophobic region and a hydrophilic region. Appropriate selection of the number, length, and type and relative ratio of hydrophilic to hydrophobic groups allows adjustment of the anti-fog properties of the layer. Without being bound by theory, it is believed that such a structure allows a reduction in the interfacial tension between the surface of the layer and the condensing moisture, which enhances anti-fogging. Preferably the surfactant is also selected so as to not significantly adversely affect desirable physical properties of the polyurethane film, for example chemical resistance, scratch resistance, ultraviolet (UV) radiation resistance, and the like.

In addition, the surfactant comprises an isocyanate-reactive functionality. Such surfactants co-react to provide a polyurethane having the surfactant covalently bound and attached as a pendant group to the polyurethane polymer. Preferably, the surfactant attaches at the end of the polyurethane polymer. Suitable isocyanate-reactive functionalities include groups having an active hydrogen atom, for example a hydroxyl group, a carboxyl group, a primary or secondary amino group, or a sulfhydryl group. A compound having a combination comprising at least one of the foregoing types of groups may also be used.

Suitable surfactants comprising an isocyanate-reactive functionality and having a hydrophilic region and a hydrophobic region are disclosed, for example, in U.S. Patent No. 5,877,254 to LaCasse, and may be nonionic, anionic, cationic, amphiphilic, or a mixture of the foregoing types of surfactants. Suitable nonionic surfactants include ethoxylated or propoxylated alcohols, phenols, amides, and amines.

Suitable ionic surfactants include quaternary cationic surfactants or anionic surfactants, for example cationic or anionic surfactants having a non-ethoxylated hydrocarbon chain with greater than 16 carbon atoms.

A non-limiting list of examples of suitable anionic surfactants includes monoethanolamine salts of sulfonic acids, diethanolamine salts of sulfonic acids, triethanolamine salts of sulfonic acids and mixtures thereof.

Examples of hydroxyl-containing cationic-surfactants include, without limitation, ricinoleamidopropyl dimethylethyl ammonium ethylsulfate, (12-hydroxy-1-oxo-9-octadecenyl)amino)-N,N-dimethyl, ethyl sulfate (salt)); stearamidopropyl dimethylethanolammonium methyl sulfate, and octadecylmethol diethanolammonium chloride.

Typical anionic surfactants rarely contain free, reactive hydroxyl groups in their structure, and so may be made "hydroxyl bearing" by incorporating the free hydroxyl or other isocyanate-reactive groups in their countercation. Such modification can be accomplished by neutralizing a hydroxyl bearing quaternary ammonium base such a choline hydroxide with an acid such as dodecylbenzene sulfonic acid, as described in LaCasse. Other hydroxyl-bearing ammonium compounds include but are not limited to triethylethanol-, diethyldiethano-, and ethyltriethanolammonium salts. A non-limiting list of suitable sulfonic acids from which the salts are prepared includes dodecylbenzene sulfonic acid, napthalene sulfonic acid, lignin sulfonic acids, petroleum sulfonic acids, and paraffin sulfonic acids. In this embodiment, the countercation becomes covalently bound to the polyurethane, and the anionic portion of the surfactant is associated with the polyurethane by virtue of the electrostatic attraction between the anion and countercation.

Combinations of reactive hydroxyl-bearing anionic and cationic surfactants are particularly useful, for example a combination of choline dodecylbenzene sulfonate with ricinoleamidopropyl ethyldimonium ethosulfate.

The surfactants may be used in concentrations of about 10% to about 40% by weight of total solids of the polyurethane-forming composition.

Formulations for the formation of polyurethane films generally include an isocyanate-containing component and an active hydrogen-containing component reactive with the isocyanate-containing component. Suitable isocyanate-containing components include, for example, hexamethylene diisocyanate, diphenylmethane diisocyanate, bis(methylcyclohexyl) diisocyanate and toluene diisocyanate. The isocyanate-containing component may be a prepolymer, for example a biuret or an isocyanurate of a diisocyanate, e.g., a prepolymer of diisophorone diisocyanate. Combinations comprising at least one of the foregoing isocyanate-containing compounds may be used. Blocking of the isocyanate group, for example with an oxime or phenol, and later removal of the protective group prior to reaction is also contemplated. When blocked isocyanates are used, it is possible to use solvents or other compounds which, but for the protective group in the isocyanate, would react with and consume the isocyanate groups.

The isocyanate-containing component is reacted with a hydrophilic component having an active hydrogen, particularly a hydroxyl hydrogen as is found in polyols. In order to provide the desired anti-fog characteristics, hydrophilic polyols are used, such as polyethylene glycol, ethylene glycol/propylene glycol copolymers, and mixtures thereof. Other suitable hydrophilic polyols include polybutylene glycol, polyethylene imine, amine-terminated polyethers, and certain polyester polyols. A combination of hydrophilic polyols may be used, for example, a polyethylene oxide/propylene oxide random triol having a molecular weight of about 4500 and containing approximately 70% ethylene oxide combined with an ethylene oxide/propylene oxide block copolymer of molecular weight 2100 and containing about 20% ethylene oxide. Such a combination provides enhanced hydrophilicity to the polyurethane backbone without substantially compromising scratch-resistance or interfering with the incorporation of the surfactant.

The hydrophilic polyol may be present in the composition in amount of about 10% to about 35% by weight of the total solids, and specifically about 15% to about 65%.

In practice, the isocyanate-containing component, active hydrogen-containing component, and reactive surfactant may be combined in a suitable organic solvent. The organic solvent may be selected from a number of materials that do not react rapidly with isocyanates, including ketones, esters, glycol esters, and tertiary alcohols. Minor amounts of inert diluents such as aliphatic hydrocarbons and esters may also be used. Water and alcohols may be used if commercially available blocked isocyanates are used. Other components may be present, for example UV inhibitors, stabilizers, and catalysts.

For example, in one manner of proceeding, a polyisocyanate prepolymer having free isocyanate groups is mixed with an organic solvent solution of a hydrophilic polyol and a hydroxyl-bearing surfactant having a hydrophilic region and a hydrophobic region. The mixture is then allowed to heat cure at appropriate temperatures, e.g. between about 20°C to and about 200°C for a sufficient amount of time, e.g., about five minutes to about 24 hours. Cure time and temperature will vary depending on the components and application.

The anti-fog layer is disposed on a substantially transparent film. The film is selected to provide support to the layer. The film may also be selected so as to provide the desired level of flexibility, adhesion between the anti-fog layer and the film (with or without an adhesive), adhesion between the film and substrate (with or without an adhesive), and/or the desired compatibility with an adhesive. As such the choice of film composition will vary depending on the desired properties, including flexibility and transferability as described below. Suitable film materials that may be made substantially transparent include, for example, polycarbonate, acrylic, vinyl, styrene-based films, polyvinylchloride, polybisallyl carbonate, polyethylene terephthalate, and substantially transparent polyethylene naphthenate, as well as polymer blends comprising at least one of the foregoing types of polymers. Various polyolefins or fluorinated polymers may also be used with appropriate pretreatments. Specific substrates include polycarbonate (e.g., LEXAN® from GE Advanced Materials), polyester (for example, poly(cyclohexanedimethanol terephthalate)-co-poly(ethylene terephthalate), abbreviated as PETG when the polymer comprises greater than or equal to 50 mole% of poly(ethylene terephthalate), acrylic, polyvinylchloride, polybisallyl carbonate, polyethylene naphthenate, polycarbonate/poly(1,4- cyclohexylene dimethylene 1,4- cyclohexanedicarboxylate) (e.g., XYLEX from GE Advance Materials).

The surface of the film may optionally be treated to improve adhesion of the anti-fog layer to the film, for example with an adhesive, by mechanical roughening, plasma treatment, chemical etching, or other known treatments.

The anti-fog layer may be disposed on the substantially transparent film by a variety of methods, for example casting, coating (e.g., wire wound rod coating, gravure coating, slot die coating, pan fed reverse roll coating, and nip fed coating), and the like. The technique is selected so as to provide a uniform and thick coating, e.g, a coating having a thickness of about 0.0001 to about 0.1 inches (about 2.5 to about 2,540 micrometers, more specifically about 0.001 to about 0.01 inches (about 25.4 micrometers to about 254 micrometers), even more specifically about 0.003 to about 0.008 inches (about 76.2 micrometers to about 203 micrometers. Where an organic solvent is used, the solvent may be removed during or after cure by evaporation, for example in an oven, in a one- or two-stage process. Cure and solvent removal, in particular time, temperature, and airflow during cure and solvent removal, is optimized to provide a uniform coating with low temperature anti-fog properties.

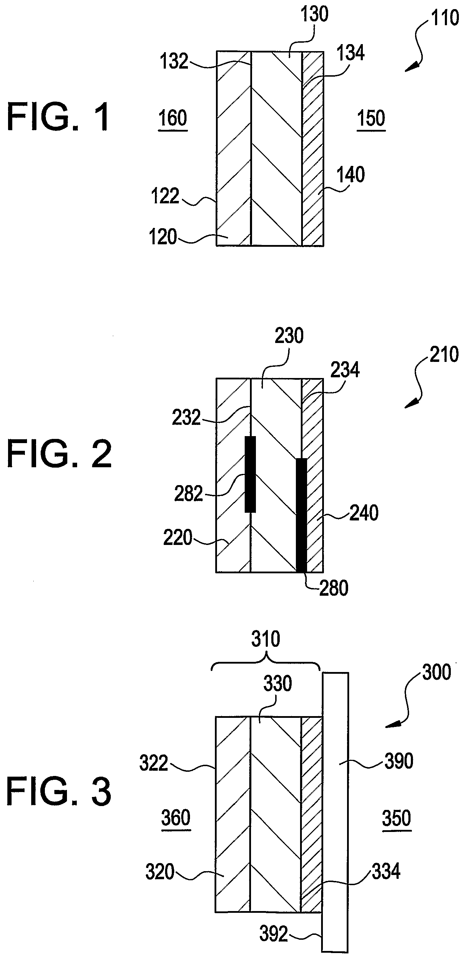

Several embodiments of anti-fog film assemblies and articles formed therefrom are described below with reference to individual drawing figures. In Figure 1, a schematic view of an anti-fog film assembly 110 is illustrated. Anti-fog film assembly 110 comprises an anti-fog layer 120 and a substantially transparent film 130 having a first surface 132 and second surface 134 opposite first surface 132. Anti-fog layer 120 is disposed on an area of first surface 132, that is, in physical communication with all or a portion of first surface 132, as determined by the desired application.

Anti-fog film assembly 110 further comprises an adhesive layer 140 for temporarily or permanently adhering the assembly to a substrate (not shown). Adhesive layer 140 allows for repositioning of anti-fog film assembly 110. Adhesive layer 140 is disposed on an area of second surface 134 of film 130. Suitable adhesives for use with the anti-fog film assemblies are known to those skilled in the art and include, but are not limited to, pressure sensitive adhesives, silicone adhesives, acrylic adhesives (including ultraviolet cured and thermally cured adhesives, wet applied and dry applied adhesives), rubber adhesives, heat-seal adhesives, laminating adhesives, high temperature adhesives, and other adhesives that will achieve the intended result. Wet-applied acrylic adhesives sometimes known as "window adhesives" are of particular utility.

With the adhesive layer 140, anti-fog film assembly 110 is substantially optically clear, providing visibility from an area 150, through adhesive layer 140, film 130, and anti-fog layer 120 to area 160.

In another embodiment, shown in Figure 2, an anti-fog film assembly 210 further comprises a graphic component 280 on second surface 234 of film 230 and/or a graphic component 282 on first surface 232 of film 230. In this embodiment, as shown, anti-fog layer 220 is disposed on an area of film 230 having a first surface 232 and second surface 234 opposite first surface 232. The graphic component(s) 280, 282 may be any of a variety of designs, including letters, words, numbers, aesthetic images, borders, symbols or the like. The graphic component(s) may be applied via any of a variety of techniques including screen printing, pad printing, sublimation, laser printing, digital offset printing, lithography, offset printing, ink jet printing, digital ink jet printing, digital offset printing, heat transfer printing, and the like. Other techniques are known to those skilled in the art. Advantageously, graphic component(s) 280, 282 may enhance appearance and provide additional information including advertising, without significantly impairing visibility. As shown, an area of graphic component 280 and/or an area of second surface 234 is coated with an adhesive 240 to allow for repositioning and adherence of film assembly 210 to a substrate. A single graphic component may be disposed on a surface of film 230, or there may be more than one graphic component disposed on second surface 234 and/or on first surface 232.

As shown in Figure 3, an article 300 comprises an anti-fog film assembly 310 and a substrate 390. Second surface 334 is placed adjacent an area of a surface 392 of a substrate 390 so as to provide anti-fog layer 320 with an exposed surface 322 adjacent to an area 360. In use, exposed surface 322 is alternately exposed to a temperature as low as about -23°C, such that exposed surface 322 substantially does not fog when exposed to moist air equal to or greater than the surface temperature of exposed surface 322. In one embodiment, as shown, adhesive layer 340 is used to permanently or temporarily adhere anti-fog assembly 310 to substrate 390.

Suitable substrates include, but are not limited to, substantially transparent glass, plastic, and substrates known to those skilled in the art to be suitable for a desired application. As the applications may be varied, so is the selection of substrate. For instance, substrates considered suitable for a refrigerated door may be determined by the presence or absence of heating devices, type, and design of refrigeration unit, and proposed use and life span. The film assemblies are designed to be positioned in operational relation to a substrate and/or form a transferable, non-permanent bond at the surface of a substrate and provide at least a substantially non-fogging area of the substrate surface. Therefore, the film assemblies are particularly suited for use in refrigerated units, including refrigerators and freezers. And, while reference is made to refrigerated units and components such as refrigerated doors throughout this disclosure, it is to be understood that one skilled in the art can readily use the anti-fog films disclosed herein in other applications without undue experimentation. Other applications include, for example, building windows such as house windows, windshields of vehicles such as cars, trucks, motorcycles, boats, airplanes, and the like, reflective surfaces such as bathroom mirrors, automotive mirrors, and the like, scientific equipment, for example on the face of displays, gauges, and the like, and face shields, for example medical face shields.

The anti-fog film may be applied onto a substrate in a non-permanent fashion, or placed in operative relation to a substrate to provide anti-fog properties to the substrate without becoming permanently affixed to the substrate. Thus, in one embodiment the film and/or the adhesive applied to the second surface of the film is selected so as to allow repositioning, transferability, and/or easy removal of the anti-fog film assembly. For example, the anti-fog film assembly may be wet applied so that the film can be repositioned until satisfactorily positioned, and form a bond upon drying. For example, a typical application includes applying a solution of about 99% or more of water and about 1% or less of soap to a room temperature substrate. Application of the solution onto the substrate surface may be by those methods known in the art, including spraying the solution using an atomizer. The adhesive portion of the anti-fog film is placed against the solution-wet substrate. The film may be repositioned into satisfactory position, any air bubbles are squeezed out with a squeegee, and allowed to dry. In this manner, the anti-fog coating adheres to the surface of the substrate but the coating does not molecularly bond at its interface with the substrate. Alternatively, the anti-fog film assembly can be applied to the substrate by spraying the adhesive side of the film and applying this side, wet with solution, to the substrate.

As used herein the term "refrigerator panel" refers to any substrate used as a door or window for a refrigerated unit having an internal temperature less than or equal to about -10°C or below, specifically -17°C to about -23°C. The internal temperature and temperature range will be determined by the application of the cooled unit, and the items the unit is designed to store, display and preserve. For instance, food, medical supplies, and transplant organs have refrigerated units and temperature requirements designed to serve the specific storage needs of these items.

In refrigerated units, the anti-fog film assembly may be used in conjunction with low-emissivity (low-E) glass or coatings. The low-E glass may be selected to meet two primary criteria: high reflective capability as to the infrared spectrum (thereby rejecting invisible radiant heat); and high visibility transmittance (so that is does not obscure or cloud visibility through it). There are a large number of glass materials having varying low-emissivity properties. Low-E glass and low-E coated glass or plastics as discussed herein are meant to refer to glasses or plastics that are designed not to emit (and thus reflect) radiation above 0.7, and more particularly from 0.7 to 2.7 microns. Typically several layers are used to reflect greater percentage in the 0.7 to 2.7 micron range. The low-E surfaces or coatings may have visible transmittance of about 70% to about 90%.

The anti-fog film assemblies are useful for preventing condensation on substrates that are alternately held at temperatures of 0°C to -23°C, and then exposed to moist ambient air at temperatures of about 18°C to about 30°C for up to about 2 minutes. The relative humidity of ambient air is generally about 40 % to about 70%. As used herein "moist ambient air" refers to the temperatures and relative humidity within the ranges stated above that are most typically associated with the humid ambient conditions in a grocery store, convenience store, supermarket or the like, or the area adjacent to a beverage cooler. Thus, in another embodiment, the anti-fog film assemblies prevent significant condensation on substrates that are alternately held temperature of about -17°C to about -23°C, then exposed to a temperature of about 20°C to about 25°C, specifically about 21 to about 24°C, for up to one minute, in the presence of air having a relative humidity of about 40 to about 50%

The fact that condensation is minimized or prevented at these low temperatures without use of external heaters represents a significant advance over the prior art. For example, approximately 1.4 amps are required to heat a refrigerated display door. Use of the above-described assemblies allows the owner to eliminate such heating. In a facility, e.g, a store, having 100 to 140 doors per store and 120 volt power, this translates to about a 60 amp savings for the store owner. Heat is still applied to the doorframe but the majority of the heat can be turned off completely with the use of the film assemblies. Store owners and other users of refrigerated units can thus realize a significant energy savings.

The invention is further illustrated by the following non-limiting examples.

### Example 1.

An anti-fog assembly comprising an anti-fog layer disposed on a polycarbonate film was manufactured using a polyurethane anti-fog layer formed from a composition comprising the following formulation (% by volume).

| | |
|---|---|
| FSI 106-94* Part A: 47.6 % hydrophilic polyols | (10 parts by weight) |
| FSI 106-94* Part B: 19.1% isocyanate prepolymer) | (4 parts by weight) |
| Tertiary Butyl Alcohol:25.0% solvent weight) | (5.25 parts by |
| Diacetone Alcohol**:8.3% solvent | (1.75 parts by weight) |

| | |
|---|---|
| *from Film Specialties, Inc. **4-hydroxy-4-methyl-2-pentanone | |

A wire wound rod coating technique was used to apply the formulation to the film, and the film is cured and the solvent removed in a chamber oven with active airflow. Coating thickness is 0.005 to 0.0065 inches (127 to 165 micrometers) and curing temperature is about 235°F (113°C) (between 230 and 250°F (110 to 121°C)) for 3 to 5 minutes. Fan speed is adjusted so that very low air flow (fan speed of about 500 rpm) is present for the first 1 to 2 minutes of cure and high airflow (fan speed of about 1500 rpm) is present for the last 2 to 3 minutes of cure. A high polish polyester mask (e.g., Dupont KL1, 1 mil mask) is used on the coated side of the polycarbonate. Non-polished masks leave a haze on the product and reduce the time to fog. The above conditions provide excellent cure of the coating and time to fog values that can be in excess of 2 minutes. Shorter cure times (e.g., less than 3 minutes) combined with high fan speeds and non-polished masks can result in time to fog values of below 30 seconds.

The other side of the polycarbonate film was coated with a window film wet applied repositionable acrylic adhesive. The assembly was applied to a glass substrate by spraying the glass with a solution of 99% water/1% detergent, then pressing the adhesive of the assembly against the glass, squeezing out any air bubbles with a squeegee, and allowing to completely dry.

The anti-fog effectiveness of the assembly was tested by equilibrating the assembly and a window substrate for 2 hours prior to testing. Substrates with and without the anti-fog coating were then exposed to ambient conditions (21°C, 50%_RH) for 60 seconds, and then returned to the indicated temperature. The window was then watched and the time for the window to become fog free was recorded.

The results are shown in the Table below. In each instance the substrate without the anti-fog coating showed condensation. Time for the condensation to clear was measured and is shown below.

| Surface Temperature, °F (°C) | Area containing anti-fog assembly remains clear with door opened and after closing | Time for comparative surface to clear after opening, minutes:seconds |
|---|---|---|
| 30 (-1.1) | yes | 1:30- |
| 25 (-3.9) | yes | 1:30- |
| 20 (-6.7) | yes | 1:30 |
| 15 (-9.4) | yes | 1:30 |
| 10 (-12.2) | yes | 2:30 |
| 5 (-15) | yes | 3:30 |
| 0 (-17.8) | yes | 3:45 |
| -5 (-20.6) | yes (snowflakes in one corner)* | 6:30 |
| -10 (-23.3) | yes (snowflakes in one corner)* | 6:00 |
| -15 (-26.1) | ice formed in some areas | 6:00 |
| -20 (-28.9) | frost on glass and film | - |

| | | |
|---|---|---|
| *Snowflakes were formed on areas of contamination and therefore are not considered failures | | |

As may be seen from the above data, the surface area of a substrate at a temperature of about 0°C to about -23°C with the anti-fog assembly remains clear and substantially without fogging. The anti-fog film assemblies disclosed herein therefore allow a refrigerator door to be opened and closed throughout the course of the day, substantially without fogging when exposed to moist air equal to or greater than the surface temperature of the substrate, and thus not obscuring the view of the items within the refrigerated unit.

### Example 2.

The above described antifogging film assembly was applied to refrigeration units in an actual grocery store. The refrigeration units were set at -29°C, the air temperature inside the unit was -23°C and the air in the store was 21° to 24°C at 40 to 50% RH. Under these conditions there was no fogging observed on doors with the anti-fog material applied, even after 1 minute of being opened. Doors without the anti-fog material fogged within 10 to 15 seconds. No difference was seen between doors that were heated and had the anti-fog film assembly and those that were not heated and had the anti fog film assembly. This would allow the average store with 100 to 140 doors to run without heated doors and save approximately 60 amps for the store.

The terms "first," "second," "outer", "internal," "external," and the like as used herein do not denote any order, quantity, or importance, but rather are used to distinguish one element from another, and the terms "a" and "an" as used herein do not denote a limitation of quantity, but rather denote the presence of at least one of the referenced item. Furthermore, all ranges directed to the same property or quantity is inclusive and independently combinable.

While the invention has been described with reference to several embodiments thereof, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed as the best mode contemplated for carrying out this invention, but that the invention will include all embodiments falling within the scope of the appended claims.

## Claims

1. An anti-fog film assembly (110) for preventing condensation on a substrate comprising:
A transparent film (130) having a first surface (132) and a second surface (134) opposite the first surface (132); and
a transparent anti-fog layer (120) formed from
a polyurethane-film forming composition comprising 10% to 40% by weight of total solids of the polyurethane forming composition of a hydroxyl-bearing surfactant having a hydrophobic region and a hydrophilic region, a polyisocyanate-containing component, and an active hydrogen-containing component reactive with the polyisocyanate-containing component, or
a polyisocyanate prepolymer having reactive isocyanate groups, a hydrophilic polyol, and a hydroxyl-bearing surfactant having a hydrophilic region and hydrophobic region;
effective to provide the layer with anti-fog properties when said substrate is alternatively held between -23°C and 0°C and then exposed to ambient air with a relative humidity of 40% to 70% at temperatures of 18 ºC to 30 ºC for up to 2 minutes, the anti-fog layer being disposed on an area of the first surface of the film; and
an adhesive layer (140) disposed on an area of the second surface (134) of the transparent film (130),
wherein the film assembly (110) provides visibility through said adhesive layer (140), said film (130) and said anti-fog layer (120)
wherein the assembly is repositionable on the substrate (390).

2. The anti-fog film assembly (110) of claim 1, wherein the film is selected from the group consisting of a polycarbonate, a polyester, a poly(cyclohexanedimethanol terephthalate)-co-poly(ethylene terephthalate), an acrylic, a polyvinylchloride, a polybisallyl carbonate, a polyethylene naphthenate, a polycarbonate/PCCD blend, and a blend comprising at least one of the foregoing polymers.

3. The anti-fog film assembly (110) of claim 1, wherein the surfactant is a cationic surfactant having the hydroxyl group covalently bound to the surfactant or is an anionic surfactant associated with a countercation, and wherein the hydroxyl group is covalently bound to the countercation or is a combination of a cationic surfactant and an anionic surfactant.

4. The anti-fog film assembly (110) of claim 1, further comprising a graphic component (280).

5. The anti-fog film assembly (110) of claim 1, wherein the adhesive is a wet applied acrylic window adhesive.

6. The anti-fog film assembly (110) of claim 5, wherein the adhesive layer (140) comprises a solution comprising greater than or equal to 99% of water and less than or equal to 1% soap.

7. A condensation-resistant article comprising:
a transparent substrate having a first surface; and
the anti-fog film assembly of claim 1, wherein the second surface of the film is disposed on an area of the substrate.

8. The article of claim 7 wherein the article is a refrigerator panel, a building window, a windshield, a reflective surface, an instrument surface, or a face shield.

9. The article of claim 7, wherein the substrate is a windshield of a vehicle.

10. The article of claim 7, wherein the substrate is a windshield of a vehicle selected from the group consisting of cars, trucks, motorcycles, boats and airplanes.

## Patentansprüche

1. Antibeschlagfilmanordnung (110) zum Verhindern von Kondensation auf einem Substrat, umfassend:
Einen transparenten Film (130) mit einer ersten Oberfläche (132) und
einer zweiten Oberfläche (134) gegenüberliegend der ersten Oberfläche (132); und
eine transparente Antibeschlagschicht (120) gebildet aus
einer Polyurethanfilm bildenden Zusammensetzung, bestehend zu 10 bis 40 Gewichts% der gesamten Feststoffe der Polyurethan bildenden Zusammensetzung aus einer Hydroxyl tragenden oberflächenaktiven Substanz mit einem hydrophoben Bereich und einem hydrophilen Bereich, einer Polyisocyanat enthaltenden Komponente und einer aktiven Wasserstoff enthaltenden Komponente, die reaktiv mit der Polyisocyanat enthaltenden Komponente ist, oder
einem Polyisocyanat-Prepolymer mit reaktiven Isocyanatgruppen, einem hydrophilen Polyol und einer Hydroxyl tragenden oberflächenaktiven Substanz mit einem hydrophilen Bereich und hydrophoben Bereich;
wirksam, um die Schicht mit Antibeschlageigenschaften bereitzustellen, wenn das besagte Substrat abwechselnd zwischen -23°C und 0°C gehalten und dann Umgebungsluft ausgesetzt wird mit einer relativen Luftfeuchtigkeit von 40% bis 70% bei Temperaturen von 18°C bis 30°C für bis zu 2 Minuten, wobei die Antibeschlagschicht auf einer Fläche der ersten Oberfläche des Films aufgebracht ist; und
eine Klebeschicht (140) aufgebracht auf einer Fläche der zweiten Oberfläche (134) des transparenten Films (130),
wobei die Filmanordnung (110) Durchsichtigkeit gewährleistet durch die besagte Klebeschicht (140), besagten Film (130) und besagte Antibeschlagschicht (120)
wobei die Anordnung auf dem Substrat (390) neu positionierbar ist.

2. Antibeschlagfilmanordnung (110) nach Anspruch 1, wobei der Film ausgewählt ist aus der Gruppe, bestehend aus einem Polycarbonat, einem Polyester, einem Poly(cyclohexandimethanolterephthalat)-co-poly(ethylenterephthalat), einem Acryl, einem Polyvinylchlorid, einem Polybisallylcarbonat, einem Polyethylennaphthenat, einer Polycarbonat/PCCD Mischung und einer Mischung umfassend mindestens eines der vorstehenden Polymere.

3. Antibeschlagfilmanordnung (110) nach Anspruch 1, wobei die oberflächenaktive Substanz eine kationische oberflächenaktive Substanz ist, mit der Hydroxylgruppe kovalent an der oberflächenaktiven Substanz gebunden, oder eine anionische oberflächenaktive Substanz ist verbunden mit einem Gegenkation, und wobei die Hydroxylgruppe kovalent an das Gegenkation gebunden ist, oder eine Kombination ist aus einer kationischen oberflächenaktiven Substanz und einer anionischen oberflächenaktiven Substanz.

4. Antibeschlagfilmanordnung (110) nach Anspruch 1, weiterhin umfassend eine grafische Komponente (280).

5. Antibeschlagfilmanordnung (110) nach Anspruch 1, wobei der Klebstoff ein nass aufgebrachter Acrylglas Klebstoff ist.

6. Antibeschlagfilmanordnung (110) nach Anspruch 5, wobei die Klebeschicht (140) eine Lösung umfasst, die größer oder gleich 99% Wasser und weniger als oder gleich 1% Seife umfasst.

7. Kondensationsbeständiger Gegenstand, umfassend:
ein transparentes Substrat mit einer ersten Oberfläche; und
die Antibeschlagfilmanordnung nach Anspruch 1, wobei die zweite Oberfläche des Films auf einer Fläche des Substrats angeordnet ist.

8. Gegenstand nach Anspruch 7, wobei der Gegenstand ein Kühlfach, ein Gebäudefenster, eine Windschutzscheibe, eine reflektierende Oberfläche, eine Instrumentenoberfläche oder ein Gesichtsschutz ist.

9. Gegenstand nach Anspruch 7, wobei das Substrat eine Windschutzscheibe eines Fahrzeuges ist.

10. Gegenstand nach Anspruch 7, wobei das Substrat eine Windschutzscheibe eines Fahrzeugs ist, ausgewählt aus der Gruppe bestehend aus Personenkraftwagen, Lastkraftwagen, Motorrädern, Booten und Flugzeugen.

## Revendications

1. Assemblage de film anti-buée (110) pour éviter la condensation sur un substrat, comprenant :
un film transparent (130) ayant une première surface (132) et une seconde surface (134) opposée à la première surface (132) ; et
une couche anti-buée transparente (120) formée à partir de
une composition formant un film de polyuréthane comprenant de 10 % à 40 % en poids de matières solides totales de la composition formant le polyuréthane d'un tensioactif hydroxylé ayant une région hydrophobe et une région hydrophile, un constituant contenant un polyisocyanate, et un constituant contenant de l'hydrogène actif qui est réactif avec le constituant contenant un polyisocyanate, ou
un prépolymère de polyisocyanate ayant des groupes isocyanate réactifs, un polyol hydrophile et un tensioactif hydroxylé ayant une région hydrophile et une région hydrophobe ;
efficace pour fournir la couche ayant des propriétés anti-buée quand ledit substrat est alternativement maintenu entre -23°C et 0 °C et puis exposé à un air ambiant ayant une humidité relative de 40 % à 70 % à des températures de 18 °C à 30 °C pendant jusqu'à 2 minutes, la couche anti-buée étant disposée sur une zone de la première surface du film ; et
une couche adhésive (140) disposée sur une zone de la seconde surface (134) du film transparent (130),
dans lequel l'assemblage de film (110) permet une visibilité à travers ladite couche adhésive (140), ledit film (130) et ladite couche anti-buée (120),
dans lequel l'assemblage est repositionable sur le substrat (390).

2. Assemblage de film anti-buée (110) selon la revendication 1, dans lequel le film est choisi dans le groupe constitué d'un polycarbonate, un polyester, un poly(cyclohexanediméthanol téréphtalate)-co-poly(éthylène téréphtalate), un acrylique, un polychlorure de vinyle, un polybisallylcarbonate, un polyéthylène naphthénate, un mélange polycarbonate/PCCD et un mélange comprenant au moins un des polymères précédents.

3. Assemblage de film anti-buée (110) selon la revendication 1, dans lequel le tensioactif est un tensioactif cationique ayant le groupe hydroxyle lié de manière covalente au tensioactif ou est un tensioactif anionique associé à un contre-cation, et dans lequel le groupe hydroxyle est lié de manière covalente au contre-cation ou est une combinaison d'un tensioactif cationique et d'un tensioactif anionique.

4. Assemblage de film anti-buée (110) selon la revendication 1, comprenant en outre un composant graphique (280).

5. Assemblage de film anti-buée (110) selon la revendication 1, dans lequel l'adhésif est un adhésif de fenêtre acrylique appliqué par voie humide.

6. Assemblage de film anti-buée (110) selon la revendication 5, dans lequel la couche adhésive (140) comprend une solution contenant un taux supérieur ou égal à 99 % d'eau et inférieur ou égal à 1 % de savon.

7. Article résistant à la condensation, comprenant :
un substrat transparent ayant une première surface ; et
l'assemblage de film anti-buée selon la revendication 1, dans lequel la seconde surface du film est disposée sur une zone du substrat.

8. Article selon la revendication 7, dans lequel l'article est un panneau de réfrigérateur, une fenêtre de bâtiment, un pare-brise, une surface réfléchissante, une surface d'un instrument ou un masque de protection.

9. Article selon la revendication 7, dans lequel le substrat est un pare-brise de véhicule.

10. Article selon la revendication 7, dans lequel le substrat est un pare-brise de véhicule choisi dans le groupe constitué par les voitures, les camions, les motocyclettes, les bateaux et les avions.
